# EUROPEAN PATENT APPLICATION

(11) **EP 4 475 274 A1**
(43) Date of publication of application: **11.12.2024**
(21) Application number: 22963771.5
(22) Date of filing: 31.10.2022
(51) Int. Cl.: H01M 10/54

(54) **LITHIUM BATTERY RECYCLING METHOD**

(71) Applicant: Jereh Environmental Protection Technology Co., Ltd., Yantai, Shandong 264003 (CN)
(72) Inventor: YU, Qun, Yantai, Shandong 264003 (CN); YU, Xuekong, Yantai, Shandong 264003 (CN); YAN, Rongjie, Yantai, Shandong 264003 (CN); LI, Meng, Yantai, Shandong 264003 (CN)
(74) Representative: Ziebig Hengelhaupt Intellectual Property Attorneys Patentanwaltskanzlei PartGmbB
(86) International application number: PCT/CN2022/128762
(87) International publication number: WO 2024/092452

(57) **Abstract**

This application belongs to the field of battery recycling technologies, and specifically, to a lithium battery recycling method. The lithium battery recycling method includes: performing split processing on a lithium battery to obtain a metal shell and an electrode assembly respectively, where the electrode assembly includes a roll core or a lamination; and recycling the metal shell. According to the recycling method in embodiments of this application, the lithium battery is not wholly crushed, but the lithium battery is split to obtain the metal shell and the electrode assembly. In other words, the metal shell obtained through recycling by using the recycling method in this application is not crushed, thereby ensuring reusability of the metal shell.

## Description

### TECHNICAL FIELD

This application belongs to the field of battery recycling technologies, and specifically, to a lithium battery recycling method.

### BACKGROUND

With the vigorous development of the new energy field, lithium battery recycling has become an indispensable and important link in the field. Therefore, a research on the lithium battery recycling and resource recycling receives widespread attention.

In the related art, the lithium battery recycling includes the following steps: crushing a lithium battery by using an electrified crushing process, so that a shell, a diaphragm, and positive and negative electrode sheets of the lithium battery are fully split; and separating crushed materials through air separation to obtain the diaphragm, the positive and negative electrode sheets, the shell, and the like, which are sorted and recycled after cleaning. It can be seen that in the related art, the entire lithium battery is crushed. In other words, the shell of the lithium battery is crushed, and consequently, reusability of the shell cannot be ensured.

### SUMMARY

An objective of embodiments of this application is to provide a lithium battery recycling method that can solve a problem that a shell of a lithium battery is crushed and reusability of the shell cannot be ensured.

To resolve the foregoing technical problems, this application is implemented as follows:
An embodiment of this application provides a lithium battery recycling method, including:
performing split processing on a lithium battery to obtain a metal shell and an electrode assembly respectively, where the electrode assembly includes a roll core or a lamination; and
recycling the metal shell.

According to the recycling method in embodiments of this application, the lithium battery is not wholly crushed, but the lithium battery is split to obtain the metal shell and the electrode assembly. In other words, the metal shell obtained through recycling by using the recycling method in this application is not crushed, thereby ensuring reusability of the metal shell.

### BRIEF DESCRIPTION OF THE DRAWINGS

FIG. 1 is a schematic flowchart of a recycling method according to an embodiment of this application; and
FIG. 2 is a schematic flowchart of another recycling method according to an embodiment of this application.

### DETAILED DESCRIPTION

The following clearly and completely describes the technical solutions in embodiments of this application with reference to the accompanying drawings in embodiments of this application. Apparently, the described embodiments are some embodiments of this application rather than all of the embodiments. All other embodiments obtained by a person of ordinary skill in the art based on embodiments of this application without creative efforts shall fall within the protection scope of this application.

The specification and claims of this application, and terms "first" and "second" are used to distinguish similar objects, but are unnecessarily used to describe a specific sequence or order. It should be understood that the data in such a way are interchangeable in proper circumstances, so that embodiments of this application can be implemented in other orders than the order illustrated or described herein. Objects distinguished by "first", "second", and the like are usually one type, and the number of objects is not limited. For example, the first object may be one or more than one. In addition, in the specification and the claims, "and/or" means at least one of the connected objects, and the character "/" generally indicates an "or" relationship between the associated objects.

The lithium battery recycling method provided in embodiments of this application is described below through specific embodiments and application scenarios thereof with reference to the accompanying drawings.

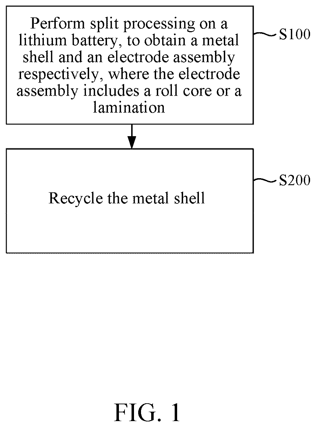

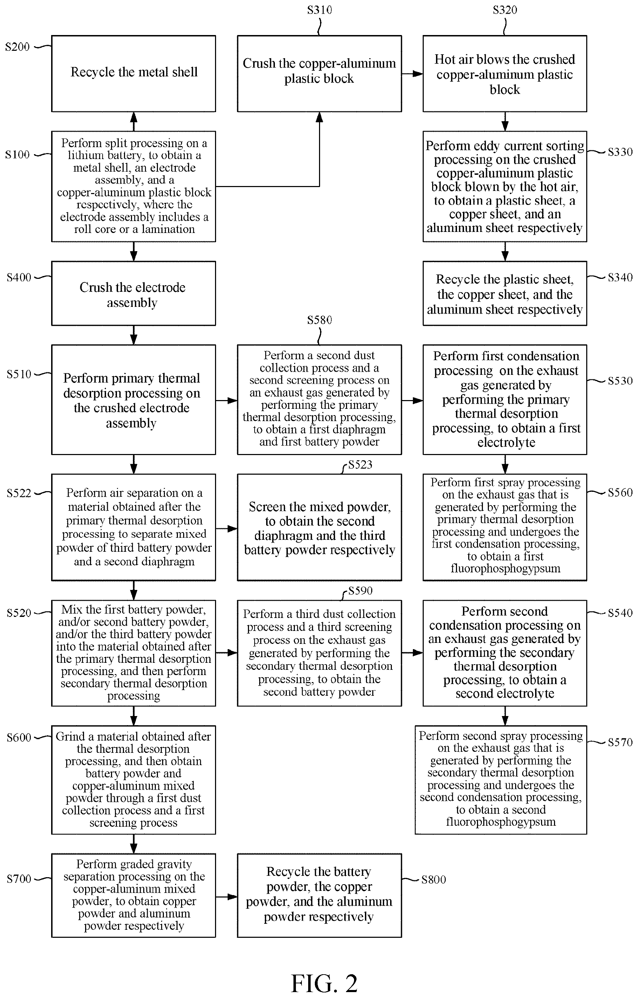

As shown in FIG. 1 and FIG. 2, an embodiment of this application discloses a lithium battery recycling method, including the following steps.

S 100. Perform split processing on a lithium battery to obtain a metal shell and an electrode assembly respectively, where the electrode assembly includes a roll core or a lamination, the roll core or the lamination includes a positive electrode sheet, a negative electrode sheet, and a diaphragm, and the diaphragm is configured to separate the positive electrode sheet and the negative electrode sheet. Optionally, a current collector of the positive electrode sheet may be an aluminum foil, and a current collector of the negative electrode sheet may be a copper foil. Optionally, split processing may be performed on the lithium battery in an oxygen-free or oxygen-deficient environment to avoid explosion. The oxygen-deficient environment refers to an environment in which the oxygen content is greater than 0% and less than or equal to 3%. An inert gas such as nitrogen, carbon dioxide, and argon may be introduced into a splitting device, so that split processing may be performed in the oxygen-free environment or the oxygen-deficient environment.

S200. Recycle the metal shell. Optionally, a material of the metal shell may be a metal material such as aluminum, steel, or aluminum-manganese alloy.

According to the recycling method in embodiments of this application, the lithium battery is not wholly crushed, but the lithium battery is split to obtain the metal shell and the electrode assembly. In other words, the metal shell obtained through recycling by using the recycling method in this application is not crushed, thereby ensuring reusability of the metal shell.

In an optional embodiment, in a step of performing the split processing on the lithium battery, a copper-aluminum plastic block is further obtained, and the recycling method further includes:
S310. Crush a copper-aluminum plastic block. In this step, the entire lithium battery is not crushed, but only the copper-aluminum plastic block is crushed, which facilitates the processing by a crushing apparatus and reduces damage to the crushing apparatus.
S320. Hot air blows the crushed copper-aluminum plastic block. There is an electrolyte remaining on the copper-aluminum plastic block. If the residual electrolyte is not dried, not only the residual electrolyte pollutes the environment after evaporation, but also the recycling quality of a copper sheet and an aluminum sheet is reduced. In this embodiment of this application, by using the hot air to blow the crushed copper-aluminum plastic block, the risk of the foregoing problem can be reduced or even avoided. Optionally, an inert gas is selected as a hot air source, such as nitrogen, carbon dioxide, and the like.
S330. Perform sorting processing on the crushed copper-aluminum plastic block blown by the hot air, to obtain a plastic sheet, a copper sheet, and an aluminum sheet respectively. Optionally, the sorting processing may be eddy current sorting, specific gravity air separation, photocurrent color sorting, and the like. Further, the sorting processing is the eddy current sorting. The eddy current sorting may continuously and effectively sort out the copper sheet and the aluminum sheet at one time, which can shorten a sorting time and improve sorting efficiency. In addition, the eddy current sorting may sort a copper-aluminum plastic block with a smaller particle size, and a sorting effect is good, thereby increasing a recycling rate of the copper sheet and the aluminum sheet. In this way, the recycling rate of the copper sheet in the crushed copper-aluminum plastic block is higher than 98.5%, a recycling rate of the aluminum sheet is higher than 98.5%, and a recycling rate of the plastic sheet is higher than 98.5%. When the sorting processing is the eddy current sorting, hot air blowing can dry the electrolyte remaining on the crushed copper-aluminum plastic block, thereby reducing the risk of explosion caused by a gas generated by evaporation of the electrolyte when the residual electrolyte enters the eddy current sorting processing.

Optionally, after step S330, the method further includes the following step.

S340. Recycle the plastic sheet, the copper sheet, and the aluminum sheet respectively.

Optionally, in the step of crushing the copper-aluminum plastic block, a crushing particle size ranges from 30 to 40 mm, and specifically, may be 31 mm, 34 mm, 38 mm, or the like. If the crushing particle size is less than 30 mm, a self-weight of the crushed copper-aluminum plastic block is small, so that when the hot air blows the copper-aluminum plastic block, the crushed copper-aluminum plastic block is easily blown up, which causes the copper-aluminum plastic block to move in a flowing direction of the hot air under the action of the hot air, and reduces a total amount of the crushed copper-aluminum plastic block, thereby reducing the recycling rate of the plastic sheet, the copper sheet, and the aluminum sheet. If the crushing particle size is greater than 40 mm, the hot air does not have a good drying effect on the crushed copper-aluminum plastic block, leaving the residual electrolyte on the crushed copper-aluminum plastic block, which also causes environmental pollution and the risk of explosion, and reduces the recycling quality of the copper sheet and the aluminum sheet.

In an optional embodiment, a blowing temperature of the hot air blowing ranges from 60 to 100°C. Optionally, the blowing temperature may be selected as 65°C, 75°C, 90°C, or the like. If the blowing temperature of the hot air blowing is less than 60°C, the drying effect on the electrolyte is poor, leaving the residual electrolyte on the crushed copper-aluminum plastic block, which also causes environmental pollution and the risk of explosion, and reduces the recycling quality of the copper sheet and the aluminum sheet. If the blowing temperature of the hot air blowing is greater than 100°C, the copper-aluminum plastic block is over-dried. Therefore, the blowing temperature of the hot air blowing is controlled in a range of 60 to 100°C, which can ensure the drying effect on the electrolyte without causing over-drying.

In an optional embodiment, the recycling method further includes the following step.

S400. Crush the electrode assembly. In other words, the crushed electrode assembly includes positive electrode current collector powder, negative electrode current collector powder, battery powder, and diaphragm powder, and each of the above may include an electrolyte. The positive electrode current collector powder herein is aluminum powder, and the negative electrode current collector powder is copper powder. In this step, the entire lithium battery is not crushed, but only the electrode assembly is crushed, which facilitates the processing by the crushing apparatus and reduces damage to the crushing apparatus. Optionally, the electrode assembly may be crushed in the oxygen-free or oxygen-deficient environment.

S500. Perform thermal desorption processing on the crushed electrode assembly. The thermal desorption processing can remove an organic matter and a phosphorus compound attached to the crushed electrode assembly, and can remove the diaphragm powder in the crushed electrode assembly, thereby improving the purity of the battery powder, the copper powder, and the aluminum powder obtained after subsequent processes. The organic matter herein is the electrolyte. Compared with a water washing method, a thermal desorption method does not produce waste water and does not require additional complicated processes such as filtration.

S600. Grind a material obtained after the thermal desorption processing, and then obtain battery powder and copper-aluminum mixed powder through a first dust collection process and a first screening process. The materials obtained after thermal desorption may stick together, which is not conducive to subsequent collection. Grinding separates the materials that are stuck together, thus facilitating subsequent collection. In addition, a particle diameter of the residual material obtained after the thermal desorption processing is large, which is not convenient to perform the first dust collection process. After grinding, the particle diameter of the residual material obtained after the thermal desorption processing may be reduced, which facilitates the first dust collection process. After the first dust collection process and the first screening process are performed, the mixed material may be divided into the battery powder and the copper-aluminum mixed powder, so that the battery powder may be recycled. It should be noted that, the battery powder herein includes first battery powder, second battery powder, and third battery powder described below. Optionally, a grinding particle diameter for grinding the material obtained after the thermal desorption processing may range from 2 to 4 mm.

S700. Perform graded gravity separation processing on the copper-aluminum mixed powder, to obtain copper powder and aluminum powder respectively. Because the particle sizes of the copper powder and the aluminum powder are relatively close, the copper powder and the aluminum powder cannot be separated through the first screening process. However, the graded gravity separation process adopted in this embodiment of this application can not only has low production costs, but also process the copper powder and the aluminum powder of a larger particle size range. Optionally, a graded gravity separation apparatus may be a hydraulic classifier, a photoelectric color sorter, a preferably photoelectric color sorter, and the like.

Optionally, after step S700, the method further includes the following step.

S800. Recycle the battery powder, the copper powder, and the aluminum powder respectively.

Optionally, a crushing particle size of the electrode assembly ranges from 20 to 40 mm, and specifically, may be 20 mm, 26 mm, 36 mm, or the like. If the crushing particle size of the electrode assembly is less than 20 mm, the electrode assembly is over-dried during the thermal desorption processing. If the crushing particle size of the electrode assembly is greater than 40 mm, a thermal desorption device may be blocked.

Optionally, the crushed electrode assembly may be subjected to primary thermal desorption processing, but during the primary thermal desorption processing, either a high-boiling-point organic matter cannot be removed, or a low-boiling-point organic matter cannot be recycled. The organic matter herein is the electrolyte. Therefore, in an optional embodiment, a step of performing the thermal desorption processing on the crushed electrode assembly in step S500 specifically includes the following steps.

S510. Perform primary thermal desorption processing on the crushed electrode assembly, where the primary thermal desorption processing may remove a low-boiling-point organic matter on the electrode assembly.

S520. Perform secondary thermal desorption processing on the material obtained after the primary thermal desorption processing, where the secondary thermal desorption processing may remove a high-boiling-point organic matter.

A temperature of the secondary thermal desorption processing is greater than a temperature of the primary thermal desorption processing.

The recycling method further includes the following steps.

S530. Perform first condensation processing on an exhaust gas generated by performing the primary thermal desorption processing, to obtain a first electrolyte.

S540. Perform second condensation processing on an exhaust gas generated by performing the secondary thermal desorption processing, to obtain a second electrolyte.

Optionally, after step S540, the method further includes the following step.

S550. Recycle the first electrolyte and the second electrolyte respectively.

It can be seen that in this embodiment of this application, the crushed electrode assembly is subjected to the primary thermal desorption processing and the secondary thermal desorption processing separately, and the temperature of the secondary thermal desorption processing is greater than the temperature of the primary thermal desorption processing, so that the low-boiling-point organic matter on the electrode assembly can be removed in the primary thermal desorption processing, and a low-boiling-point first electrolyte may be recycled after the first condensation processing. In addition, the high-boiling-point organic matter on the crushed electrode assembly can be removed during the secondary thermal desorption processing, and a high-boiling-point second electrolyte may be recycled after the second condensation processing. Therefore, this embodiment of this application can not only remove the high-boiling-point organic matter, but also recycle the low-boiling-point electrolyte, thereby improving a reuse rate of the lithium battery.

Optionally, both the primary thermal desorption processing and the secondary thermal desorption processing are performed in an oxygen-free environment or an oxygen-deficient environment. An inert gas such as nitrogen, carbon dioxide, and argon may be introduced into the thermal desorption device, so that both the primary thermal desorption processing and the secondary thermal desorption processing are performed in the oxygen-free environment or the oxygen-deficient environment. The primary thermal desorption and the secondary thermal desorption are performed in the oxygen-free environment or the oxygen-deficient environment, which can avoid a problem of dust explosion of the battery powder during the primary thermal desorption processing and the secondary thermal desorption processing. Further, the thermal desorption device may choose a rotary kiln, a paddle drying device, a U-shaped spiral drying device, and the like. A heat source of the thermal desorption device may be high-temperature flue gas, natural gas, thermal oil, electricity, and the like.

In an optional embodiment, a processing temperature of the primary thermal desorption processing ranges from 100 to 200°C, and a processing time ranges from 20 to 40 min. If the processing temperature of the primary thermal desorption processing is less than 100°C and the processing time is less than 20 min, a desorption effect on the crushed electrode assembly is poor, and the low-boiling-point organic matter attached to the crushed electrode assembly may not be completely removed. The low-boiling-point organic matter remaining on the crushed electrode assembly cracks during the secondary thermal desorption. In this way, this part of the low-boiling-point organic matter cannot be recycled and the recycling rate of the first electrolyte is reduced. In addition, the cracked organic matter pollutes the environment. If the processing temperature of the primary thermal desorption processing is greater than 200°C and the processing time is greater than 40 min, the low-boiling-point organic matter cracks. As a result, this part of the low-boiling-point organic matter not only cannot be recycled, which reduces the recycling rate of the first electrolyte, and causes the environmental pollution. Therefore, the processing temperature of the primary thermal desorption processing is controlled in a range of 100 to 200°C and the processing time is controlled in a range of 20 to 40 min, which not only ensures the recycling rate of the first electrolyte, but also does not cause pollution to the environment. Optionally, the processing temperature of the primary thermal desorption processing may be 110°C, 150°C, 200°C, or the like, and the processing time may be 20 min, 25 min, 40 min, or the like.

A processing temperature of the secondary thermal desorption processing ranges from 300 to 600°C, and a processing time ranges from 20 to 40 min. If the processing temperature of the secondary thermal desorption processing is less than 300°C and the processing time is less than 20 min, the desorption effect on the crushed electrode assembly is poor, and the high-boiling-point organic matter attached to the crushed electrode assembly may not be completely removed, so that the purity of the recycled copper powder, the recycled aluminum powder, and the recycled battery powder is reduced. If the processing temperature of the secondary thermal desorption processing is greater than 600°C and the processing time is greater than 40 min, the high-boiling-point organic matter cracks. As a result, this part of the high-boiling-point organic matter not only cannot be recycled, which reduces the recycling rate of the second electrolyte, and causes the environmental pollution. Therefore, the processing temperature of the secondary thermal desorption processing is controlled in a range of 300 to 600°C and the processing time is controlled in a range of 20 to 40 min, which not only ensures the recycling rate of the second electrolyte and the purity of the copper powder, the aluminum powder, and the battery powder, but also does not cause pollution to the environment. Optionally, the processing temperature of the secondary thermal desorption processing may be 350°C, 450°C, 600°C, or the like, and the processing time may be 20 min, 25 min, 40 min, or the like.

The exhaust gas that undergoes the first condensation processing and the exhaust gas that undergoes the second condensation processing are both non-condensable gases and include some organic matters. If the exhaust gases are directly discharged, the environment is polluted and the recycling rate of the lithium battery is reduced. Therefore, in an optional embodiment, after step S530, the method further includes the following step:
S560. Perform first spray processing on the exhaust gas that is generated by performing the primary thermal desorption processing and undergoes the first condensation processing, to obtain a first fluorophosphogypsum; and/or
after the step S540, the method further including the following step:
   S570. Perform second spray processing on the exhaust gas that is generated by performing the secondary thermal desorption processing and undergoes the second condensation processing, to obtain a second fluorophosphogypsum.

Optionally, after the first fluorophosphogypsum and/or the second fluorophosphogypsum are obtained, the first fluorophosphogypsum and/or the second fluorophosphogypsum may be recycled.

This embodiment of this application can recycle the organic matter in the non-condensable gas that is generated by performing the primary thermal desorption processing and undergoes the first condensation processing, that is, the first fluorophosphogypsum, and/or, can recycle the organic matter in the non-condensable gas that is generated by performing the secondary thermal desorption processing and undergoes the second condensation processing, that is, the second fluorophosphogypsum. In this way, the harm of the non-condensable gas to the environment is reduced, and the recycling rate of the lithium battery is also increased. Further, the exhaust gas that is generated by performing the primary thermal desorption processing and undergoes the first spray processing and the exhaust gas that is generated by performing the secondary thermal desorption processing and undergoes the second spray processing can be incinerated, thereby preventing the exhaust gas generated by performing the primary thermal desorption processing and the exhaust gas generated by performing the secondary thermal desorption processing from harming the environment.

The exhaust gas generated by performing the primary thermal desorption processing includes the first battery powder and the first diaphragm. If the first condensation processing is directly performed on the exhaust gas, the purity of the first electrolyte obtained is low. The exhaust gas generated by performing the secondary thermal desorption processing includes the second battery powder. If the second condensation processing is directly performed on the exhaust gas, the purity of the second electrolyte obtained is low. In an optional embodiment, before step S530, the method further includes the following step:
S580. Perform a second dust collection process and a second screening process on the exhaust gas generated by performing the primary thermal desorption processing, to obtain a first diaphragm and first battery powder; and/or
before step S540, the method further including the following step:
   S590. Perform a third dust collection process and a third screening process on the exhaust gas generated by performing the secondary thermal desorption processing, to obtain second battery powder. Optionally, after the first diaphragm is obtained, the first diaphragm may be recycled.

In this embodiment of this application, the second dust collection process and the second screening process can respectively recycle the first battery powder and the first diaphragm in the exhaust gas generated by performing the primary thermal desorption processing. In this way, the recycling rate of the lithium battery is improved, and a proportion of the first battery powder and the first diaphragm entering the first electrolyte is also reduced, thereby reducing the risk of reducing the purity of the first electrolyte. The third dust collection process and the third screening process can respectively recycle the second battery powder in the exhaust gas generated by performing the secondary thermal desorption processing. In this way, the recycling rate of the lithium battery is improved, and a proportion of the second battery powder entering the second electrolyte is also reduced, thereby reducing the risk of reducing the purity of the second electrolyte.

Optionally, a dust collection apparatus for each dust collection process may be a cyclone dust collector, a bag dust collector, a pulse bag dust collector, a gravity dust collector, a metal film dust collector, and the like. A condensation apparatus for each condensation process may be a tube heat exchanger, a heat pipe heat exchanger, a plate heat exchanger, a spiral plate heat exchanger, a graphite heat exchanger, and the like. In addition, the battery powder can be transported by one or a combination of pneumatic conveying, container conveying, screw conveying, chain conveying, belt conveying, and the like, with the pneumatic conveying being preferred.

The organic matter on the first battery powder obtained through the first dust collection process and the first screening process may not be completely desorbed in the primary thermal desorption processing, which reduces the purity of the battery powder; and the organic matter on the second battery powder obtained through the second dust collection process and the second screening process may not be completely desorbed in the secondary thermal desorption processing. In this case, if the first battery powder and/or the second battery powder is directly recycled, the purity of the battery powder is reduced. Therefore, in an optional embodiment, a step of performing secondary thermal desorption processing on the material obtained after the primary thermal desorption processing in step S520 is specifically as follows.

The first battery powder and/or the second battery powder are mixed into the material obtained after the primary thermal desorption processing, and then the secondary thermal desorption processing is performed. In this embodiment of this application, the secondary thermal desorption processing is performed on the first battery powder and the second battery powder again, to further desorb the organic matter on the first battery powder and the organic matter on the second battery powder, thereby improving the purity of the battery powder.

The diaphragm may not be completely removed in the primary thermal desorption processing. The incompletely removed diaphragm undergoes the secondary thermal desorption processing, but the temperature of the secondary thermal desorption processing is high. If the temperature is too high, the performance of the diaphragm is reduced. Even if the diaphragm is recycled, the diaphragm cannot be used. Therefore, in an optional embodiment, before step S520, the method further includes the following steps.

S522. Perform air separation on the material obtained after the primary thermal desorption processing, to separate mixed powder of third battery powder and a second diaphragm.

S523. Screen the mixed powder, to obtain the second diaphragm and the third battery powder respectively. Optionally, after the second diaphragm is obtained, the second diaphragm may be recycled.

In this embodiment of this application, the second diaphragm and the third battery powder are obtained by screening the mixed powder through air separation, which prevents the second diaphragm from participating in the secondary thermal desorption processing, thereby avoiding an excessively high temperature to reduce the performance of the second diaphragm, thus ensuring the availability of the second diaphragm.

In an optional embodiment, the step of performing secondary thermal desorption processing on the material obtained after the primary thermal desorption processing in step S520 is specifically as follows.

Mix the third battery powder into a remaining material obtained after air separation, and then perform the secondary thermal desorption processing. The organic matter on the third battery powder may not be completely desorbed in the primary thermal desorption processing. If the third battery powder is directly recycled, the purity of the battery powder is reduced. However, in this embodiment of this application, the secondary thermal desorption processing is performed on the third battery powder again, to further desorb the organic matter on the third battery powder, thereby improving the purity of the battery powder.

This application further provides a specific embodiment of a lithium battery recycling method. The specific steps are as follows.

A lithium battery of 1000 kg is split at a normal temperature to obtain a metal shell of 60 kg, a copper-aluminum plastic block of 28.7 kg, and an electrode assembly of 911.3 kg, and the metal shell is placed in a metal shell recycling region; and a copper-aluminum plastic block sequentially undergoes first crushing processing, hot air blowing, and an eddy current sorting processing to obtain a plastic sheet of 3.4 kg, a copper sheet of 10.3 kg, and an aluminum sheet of 15 kg. The obtained aluminum sheet is placed in an aluminum sheet recycling region, the obtained copper sheet is placed in a copper sheet recycling region, and the obtained plastic sheet is placed in a plastic sheet recycling region.

After second crushing processing is performed on the electrode assembly of 911.3 kg, primary thermal desorption processing is performed. A processing temperature is 110°C, 150°C, or 200°C, an oxygen content is controlled to fluctuate around 2%, and a residence time is 20 min, 25 min, or 40 min. A low-boiling-point organic matter is removed, a second dust collection process is performed on an exhaust gas formed by the low-boiling-point organic matter, phosphorus, some battery powder, fluorine, and a diaphragm, and a particulate matter included in the exhaust gas is recycled. The recycled particulate matter undergoes a second screening process to obtain first battery powder of 159.39 kg and a first diaphragm of 15 kg. After the exhaust gas from the second dust collection process undergoes the first condensation processing, the first electrolyte (the low-boiling-point organic matter and other substances) of 113.88 kg is obtained. The remaining first non-condensable gas undergoes the first spray processing to obtain a first fluorophosphogypsum of 10.86 kg. In addition, a waste liquid of 12.65 kg is discharged. The high-boiling-point organic matter, the remaining battery powder, the remaining diaphragm, and other substances form a first mixture.

Air separation is performed on the first mixture to obtain mixed powder of third battery powder and a second diaphragm, and then the mixed powder is screened to obtain the second diaphragm of 215 kg and the third battery powder of 259.39 kg.

The secondary thermal desorption processing is performed on the high-boiling-point organic matter, the fluorine, the remaining battery powder and other substances (copper or aluminum), the first battery powder, the second battery powder, and the third battery powder remaining after the air separation. The processing temperature is 350°C, 450°C, or 600°C, the oxygen content is controlled to fluctuate around 2%, and the residence time is 40 min. The generated high-temperature mixed exhaust gas is processed through the third dust collection process to obtain the second battery powder of 359.39 kg. The exhaust gas after the third dust collection process is processed through the second condensation processing to obtain the second electrolyte (the high-boiling-point organic matter and other substances) of 56.94 kg. After the second spray processing, a second fluorophosphogypsum of 12.19 kg is formed, and the remaining second non-condensable gas of 0.0633 kg is incinerated and discharged. Solid residues (copper, aluminum, and battery powder) generated by performing the secondary thermal desorption processing are sent to a grinding process.

The solid residues generated by performing the secondary thermal desorption processing are ground, and then the battery powder of 606.1 kg and the copper-aluminum mixed powder of 86.7 kg are obtained through the first dust collection process and the first screening process. After graded gravity separation is performed on the copper-aluminum mixed powder, the aluminum powder of 31.4 kg and the copper powder of 55.3 kg are respectively obtained. The aluminum powder is sent to an aluminum powder recycling region, and the copper powder is sent to the copper powder recycling region.

**Table 1 Component proportion of the battery in the foregoing embodiment**

| Category | Shell | Plastic sheet | Positive electrode sheet | Negative electrode sheet | Diaphragm | Electrolyte | Total |
|---|---|---|---|---|---|---|---|
| Proportion /% | 8.53 | 0.34 | 43 | 26.62 | 2.06 | 19.45 | 100% |

The above embodiments of the present invention focus on describing the differences between the embodiments. As long as the different optimization features of the embodiments are not contradictory, the embodiments can be combined to form a better embodiment, and details are not repeated herein for the brevity of the text.

The foregoing descriptions are merely embodiments of the present invention and are not intended to limit the present invention. For a person skilled in the art, various modifications and variations may be made to the present invention. Any modification, equivalent replacement, or improvement made within the spirit and principle of the present invention shall fall within the scope of claims of the present invention.

## Claims

1. A lithium battery recycling method, comprising:
performing split processing on a lithium battery to obtain a metal shell and an electrode assembly respectively, wherein the electrode assembly comprises a roll core or a lamination; and
recycling the metal shell.

2. The lithium battery recycling method according to claim 1, wherein in a step of performing the split processing on the lithium battery, a copper-aluminum plastic block is further obtained, and the recycling method further comprises:
crushing the copper-aluminum plastic block;
blowing, by hot air, the crushed copper-aluminum plastic block; and
performing sorting processing on the crushed copper-aluminum plastic block blown by the hot air, to obtain a plastic sheet, a copper sheet, and an aluminum sheet respectively.

3. The lithium battery recycling method according to claim 2, wherein a blowing temperature of the hot air blowing ranges from 60 to 100°C.

4. The lithium battery recycling method according to claim 2, wherein the recycling method further comprises:
crushing the electrode assembly;
performing thermal desorption processing on the crushed electrode assembly;
grinding a material obtained after the thermal desorption processing, and then obtaining battery powder and copper-aluminum mixed powder through a first dust collection process and a first screening process; and
performing graded gravity separation processing on the copper-aluminum mixed powder, to obtain copper powder and aluminum powder respectively.

5. The lithium battery recycling method according to claim 4, wherein a step of performing thermal desorption processing on the crushed electrode assembly specifically comprises:
performing primary thermal desorption processing on the crushed electrode assembly; and
performing secondary thermal desorption processing on a material obtained after the primary thermal desorption processing, wherein
a temperature of the secondary thermal desorption processing is greater than a temperature of the primary thermal desorption processing; and
the recycling method further comprises:
performing first condensation processing on an exhaust gas generated by performing the primary thermal desorption processing, to obtain a first electrolyte; and
performing second condensation processing on an exhaust gas generated by performing the secondary thermal desorption processing, to obtain a second electrolyte.

6. The lithium battery recycling method according to claim 5, wherein a processing temperature of the primary thermal desorption processing ranges from 100 to 200°C, and a processing time ranges from 20 to 40 min; and
a processing temperature of the secondary thermal desorption processing ranges from 300 to 600°C, and a processing time ranges from 20 to 40 min.

7. The lithium battery recycling method according to claim 5, wherein after a step of performing the first condensation processing on the exhaust gas generated by performing the primary thermal desorption processing, the method further comprises:
performing first spray processing on the exhaust gas that is generated by performing the primary thermal desorption processing and undergoes the first condensation processing, to obtain a first fluorophosphogypsum; and/or
after a step of performing the second condensation processing on the exhaust gas generated by performing the secondary thermal desorption processing, the method further comprises:
performing second spray processing on the exhaust gas that is generated by performing the secondary thermal desorption processing and undergoes the second condensation processing, to obtain a second fluorophosphogypsum;

8. The lithium battery recycling method according to claim 5, wherein before a step of performing the first condensation processing on the exhaust gas generated by performing the primary thermal desorption processing, the method further comprises:
performing a second dust collection process and a second screening process on the exhaust gas generated by performing the primary thermal desorption processing, to obtain a first diaphragm and first battery powder; and/or
before a step of performing the second condensation processing on the exhaust gas generated by performing the secondary thermal desorption processing, the method further comprises:
performing a third dust collection process and a third screening process on the exhaust gas generated by performing the secondary thermal desorption processing, to obtain second battery powder.

9. The lithium battery recycling method according to claim 8, wherein a step of performing the secondary thermal desorption processing on the material obtained after the primary thermal desorption processing is specifically:
mixing the first battery powder and/or the second battery powder into the material obtained after the primary thermal desorption processing, and then performing the secondary thermal desorption processing.

10. The lithium battery recycling method according to claim 5, wherein before a step of performing the secondary thermal desorption processing on the material obtained after the primary thermal desorption processing, the method further comprises:
performing air separation on the material obtained after the primary thermal desorption processing, to separate mixed powder of third battery powder and a second diaphragm; and
screening the mixed powder, to obtain the second diaphragm and the third battery powder respectively.

11. The lithium battery recycling method according to claim 10, wherein a step of performing the secondary thermal desorption processing on the material obtained after the primary thermal desorption processing is specifically:
mixing the third battery powder into a remaining material obtained after air separation, and then performing the secondary thermal desorption processing.
